# EUROPEAN PATENT APPLICATION

(11) **EP 3 798 467 A1**
(43) Date of publication of application: **31.03.2021**
(21) Application number: 19200446.3
(22) Date of filing: 30.09.2019
(51) Int. Cl.: F16H 1/48, F03D 15/00, F16D 1/112, F16D 3/06

(54) **DRIVE TRAIN OF A WIND TURBINE COMPRISING A COUPLING SHAFT FOR COMPENSATING CONCENTRICITY TOLERANCES AND MISALIGNMENT OF A GEARBOX OUTPUT AXIS AND A GENERATOR TURNING AXIS**

(71) Applicant: Adwen GmbH, 27572 Bremerhaven (DE)
(72) Inventor: Rogg, Andreas, 22607 Hamburg (DE)
(74) Representative: Aspacher, Karl-Georg

(57) **Abstract**

Provided is a drive train of a wind turbine. The drive train comprises a main shaft assembly, a planetary gearbox, and a generator. The planetary gearbox comprises an output shaft. The generator comprises a torque shaft, and the drive train further comprises a coupling shaft having a first articulated joint that is coupled to the output shaft and a second articulated joint that is coupled to the torque shaft. The first and second articulated joints are configured to compensate concentricity tolerances and a misalignment between the output shaft and the torque shaft. The coupling shaft is a floating shaft having a translational degree of freedom in axial direction. The drive train comprises a first and a second mechanical stop for limiting a resulting freedom of movement of the coupling shaft in axial direction to a predetermined range of motion. Further provided are a wind turbine, and a wind park.

## Description

### Field

The invention relates to the drive train of wind turbines.

### Background

Wind is one of the most important renewable energy technologies. Wind turbines (also referred to as a wind driven power plants, wind turbine generators, or wind energy converters) are more and more arranged in large-scale offshore wind parks. There are many technical challenges relating to these offshore wind parks, as for example the assembly of parts and the transport, the erection of the wind turbine in the sea and the maintenance of the wind turbines.

DE 10 2012 012 106 A1 describes a wind power plant having a rotor, a generator, and a planetary transmission. The planetary transmission is arranged to convert a slow rotary motion of the rotor into a rapid rotary motion to operate the generator. The planetary transmission includes a transmission input shaft connected indirectly to the rotor and includes a transmission output shaft connected to the generator indirectly via a generator shaft. A coupling mechanism is arranged between the generator shaft and the planetary transmission to compensate axial, radial and angular misalignment.

### Summary

It is an object of the invention to reduce premature wear of the drive train of a wind turbine by preventing/minimizing reactive forces on the bearings in the gearbox and the generator resulting from the misalignment of said parts.

The invention provides an improved drive train of a wind turbine. According to an aspect, the drive train comprises a main shaft assembly, a planetary gearbox, and a generator. The planetary gearbox comprises a gearbox input shaft and a gearbox output shaft. The gearbox input shaft is directly or indirectly coupled to a main shaft of the main shaft assembly. The main shaft is directly or indirectly coupled to a rotor of the wind turbine. Therefore, the gearbox input shaft rotates along the rotor. The generator comprises a torque shaft. The torque shaft transmits rotational energy to the generator rotor.

According to another aspect, the drive train further comprises a coupling shaft having a first articulated joint that is coupled to the gearbox output shaft and a second articulated joint that is coupled to the torque shaft. This aspect provides that the torque shaft rotates along the gearbox output shaft.

According to another aspect, the first and second articulated joints are configured to compensate concentricity tolerances and a misalignment between the gearbox output shaft and the torque shaft by mechanically coupling the gearbox output shaft and the torque shaft while providing the respective translational and rotational degrees of freedom. The coupling shaft is a floating shaft having an additional translational degree of freedom in a direction of axial extension. The floating shaft prevents or at least minimizes reactive forces in the axial direction.

According to another aspect, the drive train has a first and a second mechanical stop for limiting a resulting freedom of movement of the coupling shaft in the direction of axial extension to a predetermined range of motion. This aspect provides the coupling shaft to have and keep a defined position.

Advantageously, the articulated joints can comprise crowned spline couplings. Crowned spline couplings form an articulated joint capable to compensate axial, radial and angular misalignments.

According to another advantageous aspect, the generator output shaft can comprise the first mechanical stop and the torque shaft can comprise the second mechanical stop. This configuration is comparatively easy to manufacture and convenient during assembly.

Differently stated, the axial movement of the coupling shaft can be constrained with a stopper in the connection to the gearbox in combination with a stopper in the connection to the generator shaft. Thereby, the coupling shaft is allowed to float between the two stopping positions.

According to another advantageous aspect, the drive train can further comprise a shimming ring arranged between the first mechanical stop and the second mechanical stop. The shimming ring can determine the range of motion of the floating coupling shaft.

In other words, the resulting tolerance from the stopper in the gearbox to the stopper in the generator, from the chain of tolerances of all the involved parts, can be eliminated by the use of an individually adjusted shimming ring, so that a predetermined axial clearance for the output shaft is achieved.

According to another advantageous aspect, the shimming ring can comprise one or more channels extending from an inner ring surface of the shimming ring to an outer ring surface of the shimming ring. The channels can be configured to guide lubricating liquid from the inner ring surface of the shimming ring to the outer ring surface of the shimming ring by means of centrifugal and/or weight force. In other words, the shimming ring can comprise channels to guide any oil from the inside to the outside. This aspect provides an efficient drainage of the lubricating liquid.

According to another advantageous aspect, at least one out of the first mechanical stop and the second mechanical stop can be configured to be an adjustable mechanical stop having an adjustable position along the longitudinal axis with respect to the gearbox output shaft or the torque shaft. This aspect provides an easy determination of the range of motion of the floating shaft.

Advantageously, the adjustable mechanical stop can comprise an outer threading configured to engage a corresponding inner threading of the gearbox output shaft or the torque shaft. In other words, the axial tolerances can be eliminated by an adjustable position of one of the stoppers, for example by means of a threaded connection between the stopper and the counterpart (e.g. the torque shaft).

According to an advantageous aspect, the adjustable mechanical stop can further comprise a clamping means to prevent unintentional movement of the adjustable mechanical stop. This aspect provides a more reliant operation.

According to another advantageous aspect, the first mechanical stop and the second mechanical stop can alternatively form part of a bayonet receptacle of a bayonet mount.

The bayonet mount can further comprise a bayonet plug. The bayonet receptacle and the bayonet plug can be configured to form a positive-locking connection which limits the freedom of movement of the coupling shaft in the longitudinal direction. The coupling shaft can comprise either of the bayonet receptacle and the bayonet plug.

Differently stated, another option to constrain the axial movement of the coupling shaft can be a fixation that stops the movement in both directions. The fixation can be located in the generator output shaft or the torque shaft. This aspect eliminates the need of an adjustment shim plate.

A fixation that stops the movement of the coupling shaft in upwind as well as in downwind direction can comprise one part (male bayonet or female bayonet) that is directly or indirectly fixed to or forms part of the generator output shaft, and a corresponding counterpart (respective female bayonet or male bayonet) that is fixed to or forms part of the output shaft.

According to another advantageous aspect, the bayonet receptacle can comprise an undercut face having an aperture. The aperture can comprise a bore and at least one cut-out extending from the bore in a radial (inward or outward) direction.

The bayonet plug can comprise a face side corresponding to the aperture. The face side can have a diameter substantially corresponding to the bore and a number of lug projections corresponding to the cut-outs.

The bayonet receptacle and the bayonet plug can be configured such that the face side of the bayonet plug can penetrate through the aperture and a relative partial rotation between the bayonet plug and the bayonet receptacle can lead to the lug projections positively engaging behind the undercut face. This aspect provides a mechanically robust/stable connection.

Advantageously, the bayonet coupling can be easily assembled. In case the coupling shaft cannot easily be accessed to assemble the female bayonet, the bayonet coupling may be provided with an outer shape so that in one position the male bayonet can be inserted into the female bayonet. By revolving the male bayonet with respect to the female bayonet a certain angle, such as 45°, the parts can interlock and thereby create the axial constraint for the output shaft.

According to another advantageous aspect, a ring plate can form the undercut face of the receptacle. This provides for efficient manufacture.

Advantageously, the coupling shaft can comprise the bayonet receptacle, and the torque shaft can comprise the bayonet plug. This configuration has shown to speed up the assembly of the drive train.

The present invention also provides a wind turbine comprising the drive train according to the aspects and embodiments of the invention.

The present invention also provides a wind park comprising a plurality of wind turbines comprising the drive train according to the aspects and embodiments of the invention.

### Brief description of drawings

Further aspects and characteristics of the invention will ensue from the following description of preferred embodiments of the invention with reference to the accompanying drawings, wherein
- FIG. 1: is a simplified perspective view of a wind park comprising a plurality of wind turbines,
- FIG. 2: is a simplified perspective view of a drive train of a wind turbine,
- FIG. 3: is a simplified cross-sectional view of a downwind portion of the drive train,
- FIG. 4a: is a simplified cross-sectional view of a torque shaft,
- FIG. 4b: is a simplified perspective view of the torque shaft,
- FIG. 5a: is a simplified cross-sectional view of a torque shaft,
- FIG. 5b: is a simplified perspective view of a shimming ring,
- FIG. 5c: is a simplified perspective view of a ring plate
- FIG. 6: is a simplified cross-sectional view of and assembly of coupling shaft and torque shaft.

### Detailed description of embodiments

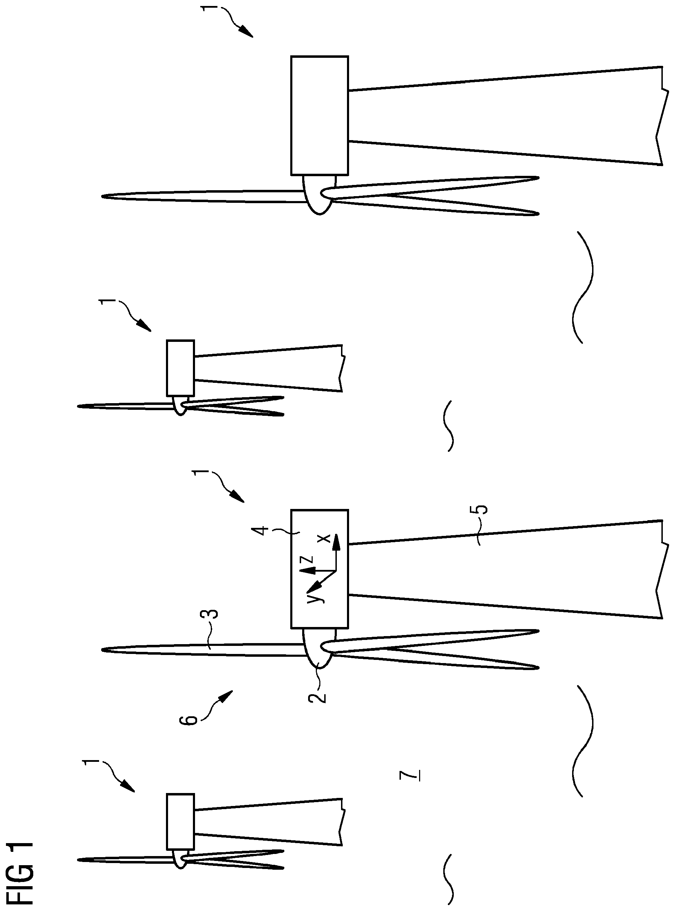

FIG. 1 shows a simplified perspective view of a wind park comprising a plurality of wind turbines 1. Each of the wind turbines 1 comprises a nacelle 4 and a rotor 6. The rotor 6 comprises a central rotatable rotor hub 2. Rotor blades 3 are attached to the rotor hub 2.

The nacelle 4 extends in a vertical direction Z, which is substantially parallel to the axial extension a tower 5 on which the nacelle 4 is mounted. The nacelle also extends in a horizontal plane defined by a longitudinal direction X, which is substantially parallel to a drive train to be located in the nacelle 4, and a transversal direction Y. The longitudinal direction X and the transversal direction Y are both perpendicular to the vertical direction Z and to each other. The longitudinal direction X substantially corresponds to the axis of rotation of the rotor 6 and the drive train.

The wind park can be an offshore wind park. Accordingly, the wind turbines 1 may be installed on the open sea 7.

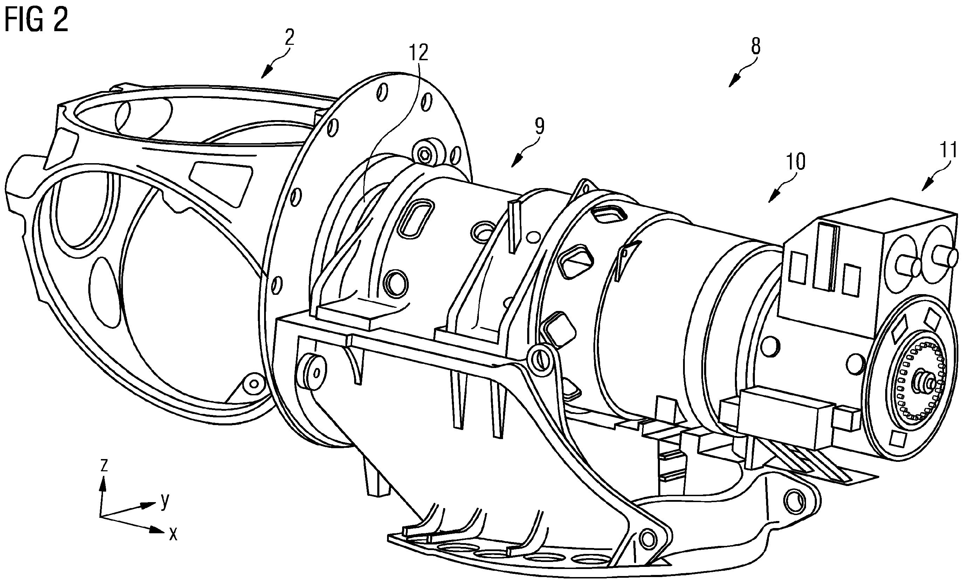

FIG. 2 shows a simplified perspective view of a drive train 8 of a wind turbine 1.

To describe the relative arrangement/position of components in the longitudinal direction X, the terms "upwind" (windward) and "downwind" (leeward), as well as "front" and "rear" are used. These references, however, relate to the wind direction under normal operations, i.e. when the rotor 6 of the wind turbine is directed (turned) towards the wind. Generally speaking, the rotor 6 is in front (upwind) of the nacelle 4. Comparing positions of two components of the drive train 8 in the longitudinal direction X, the component closer to the rotor hub 2 is referred to as upwind/front component, the component further away from the rotor hub 2 (along the longitudinal direction X) is referred to as downwind/rear component.

In downwind direction, the drive train 8 comprises a main shaft assembly 9, a gearbox 10, and a generator 11.

The main shaft assembly 9 comprises a main shaft housing 13, a main bearing, and a main shaft 12. The main bearing is mounted in the main shaft housing 13. The main shaft 12 is supported by the main bearing. The rotor hub 2 is attached to and supported by the main shaft 12. The main shaft 12 rotates along with the rotor 6.

The gearbox 10 is attached to the main shaft assembly 9. A gearbox input shaft is attached to a downwind portion of the main shaft 12. The gearbox input shaft rotates along with the main shaft 12.

The gearbox 10 comprises a multi-stage planetary gear. More precisely, the gearbox 10 comprises a two stage planetary gear. The planetary gearbox is configured to convert a slow rotary motion of the gearbox input shaft into a more rapid rotary motion of a gearbox output shaft.

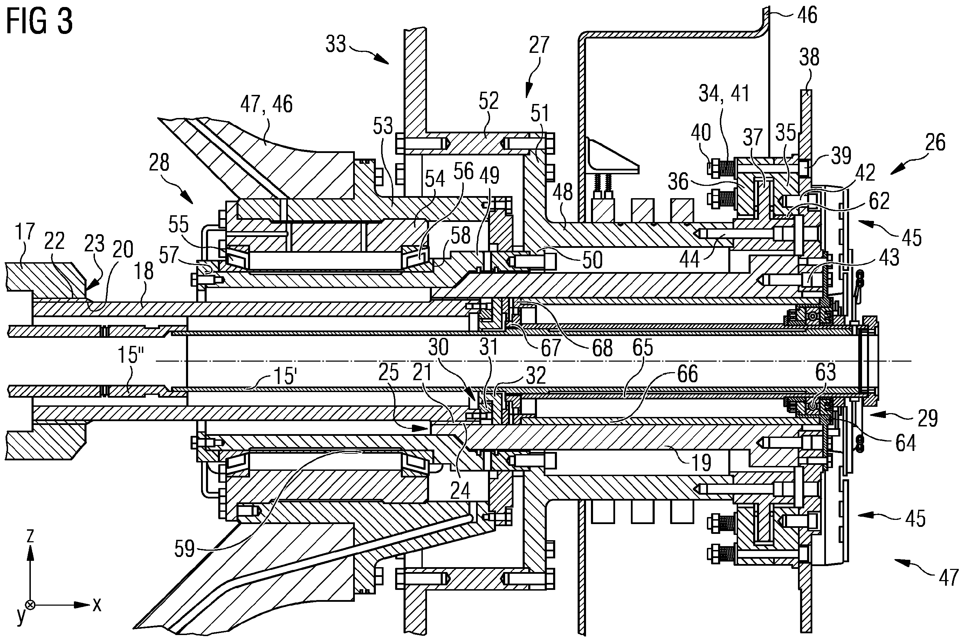

FIG. 3 shows a simplified cross-sectional view of a downwind portion of the drive train 8. The downwind portion of the drive train 8 comprises a coupling shaft 18, a torque limiter assembly 26, a generator hub assembly 27, a generator bearing assembly 28, an energy tube 15, and an energy tube bearing assembly 29.

### Coupling Shaft

The coupling shaft 18 is a hollow shaft. The coupling shaft 18 comprises a first (upwind) coupling part 20, and a second (downwind) coupling part 21.

The coupling shaft 18 is floatingly supported by a gearbox output shaft 17 and a torque shaft 19.

The gearbox output shaft 17 comprises a gearbox output coupling part 22. The first coupling part 20 of the coupling shaft 18 and the gearbox output coupling part 22 cooperatively form a first articulated joint 23.

The torque shaft 19 comprises a torque shaft input coupling part 24. The second coupling part 21 of the coupling shaft 18 and the torque shaft input coupling part 24 cooperatively form a second articulated joint 25.

The coupling shaft 18 is float-mounted between the gearbox output coupling part 22 and the torque shaft input coupling part 24.

By means of the first and second articulated joints 23, 25, the coupling shaft 18 rotates along the gearbox output shaft 17, and the torque shaft 19 rotates along the coupling shaft 17.

The first and the second articulated joints 23, 25 compensate concentricity tolerances and misalignments of the gearbox output shaft 17 and the torque shaft 19.

The articulated joints 23, 25 can be based on various functioning principles. In the depicted embodiment, the articulated joints 23, 25 each comprise a spline coupling. Splines are ridges or teeth on a drive shaft (male splines) that mesh with grooves in a mating piece (female splines) and transfer torque to it, maintaining the angular correspondence between the drive shaft and the mating piece. In this embodiment, the coupling shaft 18 comprises male splines on the first and second coupling parts 20, 21. The male splines of the first and second coupling parts 20, 21 match female splines of the gearbox output coupling part 22 and the torque shaft input coupling part 24, respectively.

The spline couplings of the first and second articulated joints 23, 25 are crowned spline couplings. The sides of the equally spaced grooves are preferably involutes. The male teeth are modified to allow for misalignment (angular movement), by having a crowned (convex) shape.

As the coupling shaft 18 is a floating shaft, the coupling shaft has a degree of freedom in axial/longitudinal direction X. The coupling shaft 18 is only supported by the first and the second articulated joints 23, 25. The coupling shaft 18 is not supported by an additional bearing.

### Constraining Means

The movement of the floating coupling shaft 18 in longitudinal direction X is constrained to a predetermined range of motion by a constraining means 30. Differently stated, the coupling shaft 18 is axially supported by the torque shaft 19 and the gearbox output shaft 17.

The constraining means 30 can be based on various functioning principles. In the depicted embodiment, the constraining means 30 comprises a bayonet coupling. More specifically, the constraining means 30 comprises a male bayonet and a female bayonet, wherein one out of the male bayonet and the female bayonet is rigidly attached to or forms part of the coupling shaft 18, and respective other out of the male bayonet and the female bayonet is rigidly attached to or forms part of the torque shaft 19. In this case, a female bayonet 31 of the bayonet coupling is rigidly attached (screwed) to the coupling shaft 18; a male bayonet 32 is rigidly attached (screwed) to the torque shaft 19.

An alternative functioning principle of the constraining means 30, for example, can be based on a first abutment surface (mechanical stop) in/at the interface of the gearbox output shaft 17 and the coupling shaft 18, and a second abutment surface (mechanical stop) in/at the interface of the coupling shaft 18 and the torque shaft 19.

### Torque Shaft and Torque Limiter

The generator rotor 33 of the generator 11 is directly or indirectly attached to the torque shaft 19. In the present case, the torque shaft 19 is attached to a torque limiter 26, and the torque limiter 26 is attached to the generator hub assembly 27. The generator hub assembly supports the generator rotor 33 and (indirectly) the torque shaft 19.

Under normal operating conditions, the generator rotor 33 rotates along the torque shaft 19.

Under extraordinary loads, such as the extremely high torque peaks in the case of a short circuit of the generator 11, however, the torque limiter 26 at least partially detaches the generator rotor 33 from the torque shaft 19. In other words, the torque limiter at least partially disconnects the mechanical (rotationally stiff) connection between the torque shaft 19 and the generator rotor 33 in case of an overload in order to temporarily allow slippage between the torque shaft 19 and the generator rotor 33.

The torque limiter (assembly) 26 is a (mechanical) overload clutch. The torque limiter comprises at least a first and a second friction surface rubbing against each other. An adjustable preloading means 34 applies an adjustable clamping force that is clamping together the first and the second friction surfaces to provide an adjustable and predetermined release torque. If the load torque becomes greater that the release torque, the torque limiter 26 at least partially disengages the connection between the gearbox 10 and the generator 11. In other words, the torque limiter 26 limits the torque in all parts of the drive train 8 to predetermined maximum torques. For example, if the gearbox is a gearbox having a transmission ratio R = n_{IN} / n_{OUT}, wherein the transmission ratio R is smaller than 1 (a speed increasing ratio), the torque in the drive train 8 upwind of the gearbox may be at maximum (considering an idealized model that is neglecting additional losses) torque of M_{UPWIND} = 1/R ^{∗} M_{RELEASE}.

In this embodiment, the torque limiter 26 comprises a first and a second clamping disk 35, 36 and a friction disk 37 that is mutually sandwiched by the first clamping disk 35 and second clamping disk 36. The preloading means 34 comprises a plurality of bolts 39 extending through the first and second clamping disks 25, 26, corresponding nuts 40, and corresponding spring elements 41. The preloading means 34 can further comprise one or more ring washers per bolt 39. In particular, the preloading means 34 comprise bolts 39 each extending through the clamping disks 35, 36 and (in this order) further extending through an optional first washer, a spring 41, an optional second washer and a nut 40. The preload / clamping force is adjusted by tightening or loosening the respective bolt-nut connections of the preloading means 34.

The first clamping disk 35 comprises a first friction surface. The friction disk comprises a second friction surface and a third friction surface. The second clamping disk 36 comprises a fourth friction surface. The frictional force between the first an the second friction surfaces and the frictional force between the fourth and the third friction surfaces transmit the rated maximum torque load (or less) from the torque shaft 19 to the generator hub assembly 27. The amount of preloading force determines the frictional force.

The first clamping disk 35 is (directly or indirectly, and) rigidly attached to or forms part of the torque shaft 19.

The friction disk 37 is (directly or indirectly, and) rigidly attached to or forms part of the generator hub assembly 27.

One or more sliding rings 62 align and center the clamping disks 35, 36 with respect to the friction disk 37 and/or the first hub shaft 48.

The torque limiter 26 is configured being a module that can be assembled and pre-adjusted at the factory. The torque limiter 26 can be mounted to the drive train 8 as a whole. In other words, the torque limiter 26 (and more precisely the first clamping disk) is bolted (screwed, flanged) to the torque shaft 19 via a brake disk 38 by bolts 43, 42. The torque limiter 26 (and more precisely the friction disk 37) is bolted to the generator hub assembly 27 by bolts 44, respectively. Stated differently, the bolts 43 rigidly attach the brake disk 38 to the torque shaft 19. The bolts 42 rigidly attach the first clamping disk 35 to the brake disk 38. The bolts 44 attach the friction disk 37 to the generator hub assembly 27.

### Holding Brake

In this embodiment, the drive train 8 further comprises a holding brake 47. The holding brake is configured to hold the rotating components of the drive train 8 in a fixed, nonrotating position. The holding brake comprises a brake disk 38 that is rigidly attached to the generator hub assembly 27 and/or the torque shaft 19. The holding brake further comprises one or more brake caliper(s) 45, each having one or more brake pads. The brake caliper(s) is/are rigidly attached (screwed, bolted) to the generator housing 46.

The brake disk 38 of the holding brake 47 provides a dual use, i.e. being a component of the holding brake 47 holding the rotational parts of the drive train 8 in a fixed position, and providing support for the first clamping disk 35 of the torque limiter 26.

Differently stated, the torque limiter 26 and the holding brake 47 can be configured as a combined module that can be mounted to the drive train 8 without requiring any kind of dismantlement (i.e. detaching the generator 11 from the gearbox 10, or removing parts of the generator 11 to access the torque limiter 26).

### Generator Hub Assembly

The generator hub assembly 27 comprises a first hub shaft 48. The first hub shaft 48 is a hollow shaft. The torque limiter 26 can be rigidly attached (screwed/bolted) to the downwind side of the first hub shaft 48.

The first hub shaft 48 further comprises a first upwind flange 50 that extends in an inward direction and a second upwind flange 51 that extends in an outward direction.

The generator rotor 33 is rigidly attached (screwed) to the second upwind flange 51 via a spacer ring 52.

The first hub shaft 48 is rigidly connected (screwed) to and supported by a second hub shaft 49 via the first upwind flange 50.

The second hub shaft 49 is comprised and supported by a generator bearing assembly 28.

### Generator Bearing Assembly

The generator bearing assembly 28 comprises an outer bearing bushing 53 that is rigidly attached (screwed) to the load bearing wall 47 of the generator housing 46 via a flange from the downwind side. An inner bearing bushing 54 is inserted into and supported by the outer bearing bushing 53. The inner bearing bushing 54 comprises an upwind flange, a first annular supporting surface adjacent to the upwind flange, and a second annular supporting surface at its distal (downwind) end. The first and second annular supporting surfaces of the inner bearing bushing 54 abut against the inner surface of the outer bearing bushing 53. The inner bearing bushing 54 is rigidly attached (screwed) to the outer bearing bushing 53 at the flange.

The inner bearing bushing 54 comprises an upwind inner recess and a downwind inner recess at the ends of the inner bearing bushing 54 to accommodate an upwind and a downwind generator rolling bearing supporting the second hub shaft 49, respectively. The upwind and downwind rolling bearings are tapered roller bearings arranged in an 'O'-configuration.

The second hub shaft 49 comprises a circumferential abutment edge on the downwind side. The inner bearing rings of the upwind and downwind generator rolling bearings 55, 56 are braced and tensioned between the abutments edge 58 and a clamping ring 57. A spacer tube 59 spaces the inner bearing rings of the upwind and downwind generator bearings 55, 56 apart. The clamping ring 57 is bolted to the second hub shaft 49. The bearing preload is determined by tensioning the respective bolts/screws connecting the clamping ring 57 to the upwind face of the second hub shaft 49.

The generator bearing assembly 28 further comprises an annular downwind sealing lid that comprises a rotary shaft seal 61 in a recess, which rotary shaft seal 61 provides a sealing between the stationary outer bearing bushing 53 of the generator bearing shaft assembly 28 and the rotating second hub shaft 49.

### Energy Tube and Energy Tube Bearing Assembly

A central energy tube 15 axially extends through the drive train 8 in longitudinal direction X. The energy tube 15 rotates along the gearbox input shaft 16 and the main shaft 12. The energy tube 15 accommodates hydraulic and/or electrical lines to supply the rotor hub 2 (and in particular devices in the rotor 2, such as pitch drives, actuators and/or sensors) with energy and/or to transmit signals.

The energy tube 15 is rotatably supported by an energy tube bearing 63 on the downwind side of the drive train 8. The energy tube bearing 63 is comprised by an energy tube bearing bushing 64. The energy tube bearing bushing 64 is rigidly attached (screwed) to the torque limiter 26, in particular to the brake disk 38.

The energy tube bearing assembly 28 (which may also be referred to as energy tube bearing cartridge 28) comprises a cartridge core shaft 65 and a cartridge jacket 66. The cartridge core shaft 66 is a hollow shaft. The energy tube bearing is sandwiched between the cartridge core shaft 65 and an energy tube bearing bushing 64. The energy tube bearing bushing 64 is at least partially inserted into and abutted against the cartridge jacket 66.

An inner labyrinth seal ring 67 is push-fitted onto an upwind end of the cartridge core shaft 65. A corresponding outer labyrinth seal ring 68 is partly inserted into and abutting against an upwind end face of the cartridge jacket 66. The inner labyrinth seal ring 67 and the outer labyrinth seal ring 68 are arranged such that they cooperatively form a labyrinth sealing adjacent to the interface (the spline coupling) of the coupling shaft 18 and the torque shaft 19. The labyrinth sealing is arranged on the downwind side of the interface.

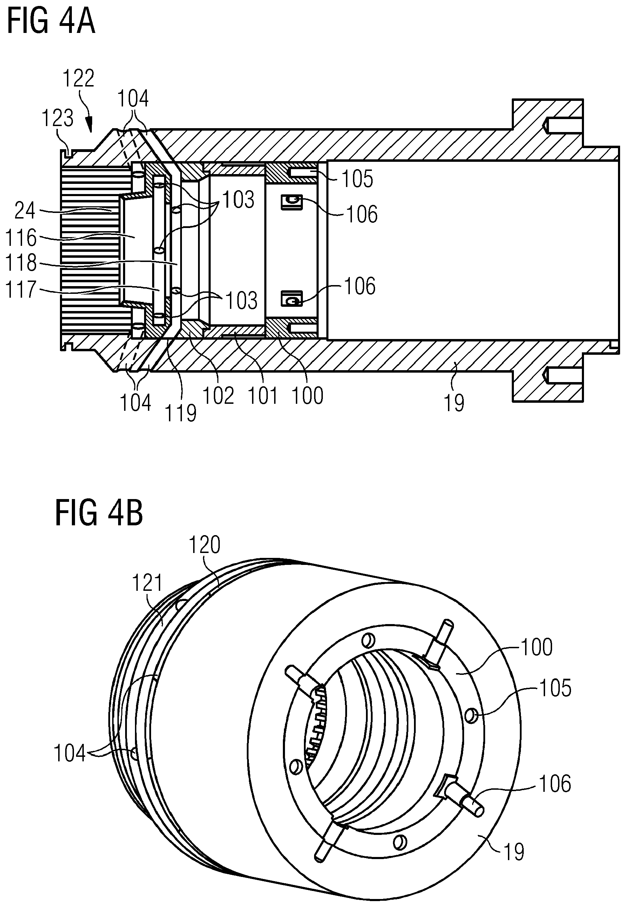

FIG. 4a and FIG. 4b show a torque shaft 19 in cross-sectional and perspective view. The torque shaft 19 is a hollow shaft.

A shimming ring 102, a spacer ring 101, and a (second) mechanical stop 100 (in that particular order) are inserted into the torque shaft 19 from the downwind side. The second mechanical stop 100 is fixed to the inside of the torque shaft 19 at a defined position.

The shimming ring 102 comprises a tapered upwind neck portion. The neck portion comprises a free inner diameter that is larger than the diameter of the energy tube 15. The energy tube 15 passes through the shimming ring 102.

The shimming ring 102 comprises a first (upwind) inner ring groove 117 and a second (downwind) inner ring groove 118 adjacent to each other and adjacent to the neck portion 116. The first inner ring groove 117 and the second inner ring groove 118 are separated by a dividing wall. The dividing wall comprises a central hole having a free diameter that is larger than the diameter of the energy tube 15.

The shimming ring 102 comprises an outer ring groove 119. The outer ring groove 119 is in fluid communication with the first inner ring groove 117 and the second inner ring groove 18. Differently stated, the shimming ring 102 comprises channels 103 that extend from the first and second inner ring grooves 117, 118 to the outer ring groove 119. The channels 103 are uniformly arranged along the circumference of the shimming ring 102.

The torque shaft 19 comprises channels 104 that extend from the inside of the torque shaft to the outside of the torque shaft. The torque shaft further comprises a first and a second outer ring groove 121, 120. The channels 104 of the torque shaft are configured to correspond to and align with the channels 103 of the shimming ring 102. More particularly, at least some of the channels 104 of the torque shaft align with the outer ring groove 119 of the shimming ring, if the position of the shimming ring 102 is defined by the position of the mechanical stop 100 and the length along the longitudinal direction of the spacer ring 101.

The fastening means 106 comprise blind holes extending from the inside of the torque shaft 19 in a radially outward direction and corresponding through holes in the mechanical stop 100. The blind holes comprise an inner threading, such that the mechanical stop 100 and the torque shaft 19 are configured to be bolted together from the inside.

The mechanical stop 100 further comprises handling means 105. In particular, the mechanical stop 100' comprises blind holes that are configured to engage with a tool for inserting the mechanical stop 100 into the torque shaft 19.

The length of the shimming ring 102 or the spacer ring 101 in longitudinal direction can be configured to provide a predefined range or motion for the coupling shaft 18.

The torque shaft 19 comprises a flange at its downwind side and an upwind neck section 122 having a substantially cylindrical end portion and an adjacent conical neck portion. The cylindrical end portion comprises an encircling groove 123 configured for receiving an o-ring seal.

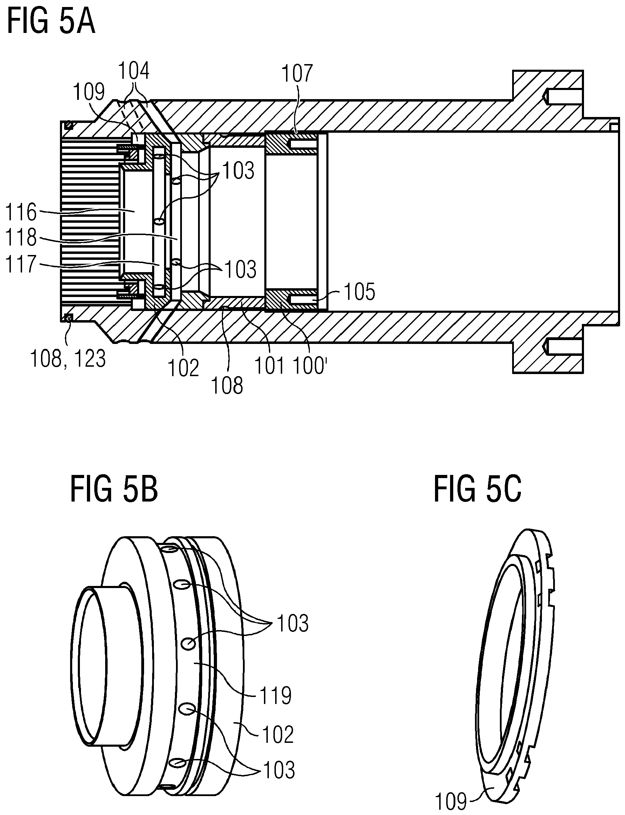

FIG. 5a shows a simplified cross-sectional view of a torque shaft 19. FIG. 5b shows simplified a perspective view of a shimming ring 102. FIG. 5c shows a simplified perspective view of a ring plate 109. The torque shaft 19 is a hollow shaft. A shimming ring 102, a spacer ring 101, and an adjustable mechanical stop 100' (in that particular order) are inserted into the torque shaft 19 from the downwind side. The adjustable mechanical stop 100 is fixed to the inside of the torque shaft 19 at an adjustable position in longitudinal direction X.

The shimming ring 102 comprises a tapered upwind neck portion 116. The neck portion comprises a free inner diameter that is larger than the diameter of the energy tube 15. The energy tube 15 (not shown) passes through the shimming ring 102.

The shimming ring 102 comprises a first (upwind) inner ring groove 117 and a second (downwind) inner ring groove 118 adjacent to each other and adjacent to the neck portion 116. The first inner ring groove 117 and the second inner ring groove 118 are separated by a dividing wall. The dividing wall comprises a central hole having a free diameter that is larger than the diameter of the energy tube 15.

The shimming ring 102 comprises an outer ring groove 119. The outer ring groove 119 is in fluid communication with the first inner ring groove 117 and the second inner ring groove 118. Differently stated, the shimming ring 102 comprises channels 103 that extend from the first and second inner ring grooves 117, 118 to the outer ring groove 119. The channels 103 are uniformly arranged along the circumference of the shimming ring 102.

The torque shaft 19 comprises channels 104 that extend from the inside of the torque shaft to the outside of the torque shaft. The torque shaft 19 further comprises a first and a second outer ring groove 121, 120. The channels 104 of the torque shaft are configured to correspond to and align with the channels 103 of the shimming ring 102. More particularly, at least some of the channels 104 of the torque shaft align with the outer ring groove 119 of the shimming ring, if the position of the shimming ring 102 is defined by the position of the adjustable mechanical stop 100' and the length along the longitudinal direction of the spacer ring 101.

The adjustable mechanical stop 100' comprises an external threading at its outer circumference, and the torque shaft 19 comprises an internal threading in a (longitudinal) center portion. The adjustable mechanical stop 100' and the torque shaft 19 are configured form a threaded connection 107 allowing the longitudinal position of the adjustable mechanical stop 100' to be adjusted. The adjustable mechanical stop 100' further comprises handling means 105. In particular, the adjustable mechanical stop 100' comprises blind holes that are configured to engage with a tool for inserting (screwing) the adjustable mechanical stop 100' into the torque shaft 19.

The torque shaft 19 comprises a flange at its downwind side and an upwind neck section 122 having a substantially cylindrical end portion and an adjacent conical neck portion. The cylindrical end portion comprises an encircling groove 123 configured for receiving an o-ring seal 108.

A ring-shaped ring plate 109 is fixed (screwed) to the downwind end face of the coupling shaft 18 (not shown). The ring plate 109 provides a first barrier for lubricating liquid running along the energy tube 15 and/or the spline coupling to the downwind side.

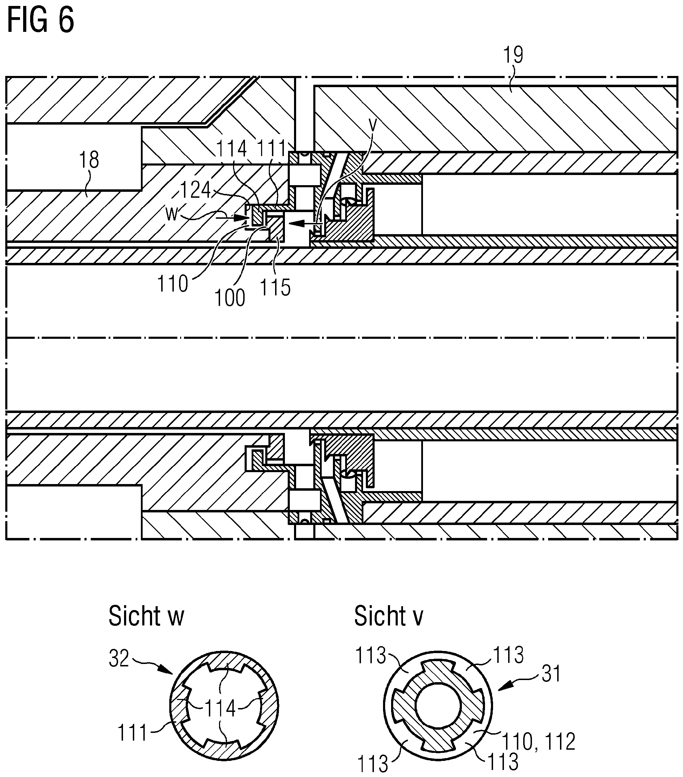

FIG. 6 shows a simplified cross-sectional view of the coupling shaft 18 and the torque shaft 19, and further simplified cross-sectional views of the female bayonet 31 and the male bayonet 32. The first mechanical stop 124 and the second mechanical stop 100 form part of a bayonet receptacle 110 of a bayonet mount. The bayonet mount further comprises a bayonet plug 111 (male bayonet). The bayonet receptacle 110 and the bayonet plug 111 are configured to form a positive-locking connection which limits the freedom of movement of the coupling shaft 18 in the longitudinal direction. The coupling shaft 18 comprises either of the bayonet receptacle and the bayonet plug. In this case, the coupling shaft 18 comprises the bayonet receptacle.

The bayonet receptacle comprises an undercut face V having an aperture 112. The aperture comprises a bore and at least one cut-out 113 extending from the bore in a radial direction.

The bayonet plug 111 comprises a face side W corresponding to the aperture 112. The face side W has a diameter substantially corresponding to the diameter of the bore and a number of lug projections corresponding to the cut-outs.

The bayonet receptacle 110 and the bayonet plug 111 are configured such that the face side W of the bayonet plug 111 can penetrate through the aperture 112 and a relative partial rotation between the bayonet plug 111 and the bayonet receptacle 110 leads to the lug projections 114 positively engaging behind the ring plate 115 forming the undercut face V.

The coupling shaft 18 comprises the bayonet receptacle 110, and the torque shaft (assembly) 19 comprises the bayonet plug 111.

Although the invention has been described hereinabove with reference to specific embodiments, it is not limited to these embodiments and no doubt further alternatives will occur to the skilled person that lie within the scope of the invention as claimed.

## Claims

1. A drive train of a wind turbine, the drive train comprising a main shaft assembly, a planetary gearbox, and a generator,
wherein the planetary gearbox comprises a gearbox input shaft and a gearbox output shaft, which gearbox input shaft is coupled to a main shaft of the main shaft assembly,
wherein the generator comprises a torque shaft, and
wherein the drive train further comprises a coupling shaft having a first articulated joint that is coupled to the gearbox output shaft and a second articulated joint that is coupled to the torque shaft, such that the torque shaft rotates along the gearbox output shaft,
wherein the first and second articulated joints are configured to compensate concentricity tolerances and a misalignment between the gearbox output shaft and the torque shaft,
**characterized in that** the coupling shaft is a floating shaft having a translational degree of freedom in a direction of axial extension, and the drive train having a first and a second mechanical stop for limiting a resulting freedom of movement of the coupling shaft in the direction of axial extension to a predetermined range of motion.

2. The drive train of claim 1, wherein the articulated joints are crowned spline couplings.

3. The drive train of claim 1 or 2, wherein the generator output shaft comprises the first mechanical stop and the torque shaft comprises the second mechanical stop.

4. The drive train of anyone of the preceding claims, wherein the drive train further comprises a shimming ring arranged between the first mechanical stop and the second mechanical stop, such that the shimming ring determines the range of motion of the coupling shaft.

5. The drive train of claim 4, wherein the shimming ring comprises one or more channels extending from an inner ring surface of the shimming ring to an outer ring surface of the shimming ring, configured to guide lubricating liquid from the inner ring surface of the shimming ring to the outer ring surface of the shimming ring by means of centrifugal and/or weight force.

6. The drive train of anyone of the preceding claims, wherein at least one out of the first mechanical stop and the second mechanical stop is configured to be an adjustable mechanical stop having an adjustable position along the longitudinal axis with respect to the gearbox output shaft or the torque shaft in order to determine the range of motion of the floating shaft.

7. The drive train of claim 6, wherein the adjustable mechanical stop comprises an outer threading configured to engage a corresponding inner threading of the gearbox output shaft or the torque shaft.

8. The drive train of claim 7, wherein the adjustable mechanical stop further comprises a clamping means to prevent unintentional movement of the adjustable mechanical stop.

9. The drive train of claim 1 or 2, wherein the first mechanical stop and the second mechanical stop form part of a bayonet receptacle of a bayonet mount.

10. The drive train of claim 9, wherein the bayonet mount further comprises a bayonet plug, wherein the bayonet receptacle and the bayonet plug are configured to form a positive-locking connection which limits the freedom of movement of the coupling shaft in the longitudinal direction, and wherein the coupling shaft comprises either of the bayonet receptacle and the bayonet plug.

11. The drive train of claim 10, wherein the bayonet receptacle comprises an undercut face having an aperture, and the aperture comprises a bore and at least one cut-out extending from the bore in a radial direction,
wherein the bayonet plug comprises a face side corresponding to the aperture, the face side having a diameter substantially corresponding to the bore and a number of lug projections corresponding to the cut-outs,
wherein the bayonet receptacle and the bayonet plug are configured such that the face side of the bayonet plug can penetrate through the aperture and a relative partial rotation between the bayonet plug and the bayonet receptacle leads to the lug projections positively engaging behind the undercut face.

12. The drive train of claim 11, wherein a ring plate forms the undercut face.

13. The drive train of anyone of claims 9 to 12, wherein the coupling shaft comprises the bayonet receptacle and the torque shaft comprises the bayonet plug.

14. A wind turbine comprising a drive train according to anyone of the preceding claims.

15. A wind park comprising a plurality of wind turbines according to claim 14. Drive train of a wind turbine comprising a coupling shaft for compensating concentricity tolerances and misalignment of a gearbox output axis and a generator turning axis
